# FASCICULE DE BREVET EUROPEEN

(11) **EP 0 780 218 B1**
(45) Date de publication et mention de la délivrance du brevet: **19.12.2001**
(21) Numéro de dépôt: 96120148.0
(22) Date de dépôt: 16.12.1996
(51) Int. Cl.: B29D 30/06, B29C 33/00, B29D 30/54

(54) **Moule à noyau rigide pour bandes de roulement annulaires notamment destinées au rechapage de pneumatiques**
Form mit steifem Kern für ringförmige Reifendecken, insbesondere zur Runderneuerung von Reifen
Mould with rigid core for annular treads, especially for recapping tyres

(30) Priorité: 19.12.1995 FR 9515892
(43) Date de publication de la demande: 25.06.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Pouille, Guy, 63000 Clermont-Ferrand (FR); Ravel, Bernard, 63830 Nohanent (FR)
(74) Mandataire: Dequire, Philippe Jean-Marie Denis

(56) Documents cités:
- EP-A- 0 320 494
- EP-A- 0 522 374
- FR-A- 2 306 069
- US-A- 5 066 448

## Description

L'invention concerne un moule à noyau rigide perfectionné pour le moulage et la vulcanisation de bandes de roulement annulaires notamment destinées au rechapage de pneumatiques.

L'invention concerne plus particulièrement un moule perfectionné comportant au moins un noyau rigide définissant la surface intérieure de la bande de roulement et une couronne divisée en secteurs mobiles radialement entre une position d'ouverture et une position de fermeture de ladite couronne, assurant le moulage extérieur de ladite bande.

L'intérêt, bien connu, d'utiliser des moules à noyau rigide réside dans la grande qualité des formes géométriques des produits moulés qu'ils permettent d'obtenir.

La publication US-A-5 066 448 décrit un moule de ce type, pour bande de roulement, comprenant un noyau rigide et une couronne divisée en secteurs mobiles radialement, et dans lequel le noyau et la couronne délimitent l'espace de moulage de la bande de roulement. Afin d'assurer une pression suffisante et uniforme sur la bande de roulement, il est nécessaire d'ajuster l'espace précité au volume de cette dernière. Mais la phase de moulage commence généralement avant la fermeture complète du moule, ce qui entraîne des risques de fluage du caoutchouc issu de la bande de roulement entre les secteurs et le noyau. Ces zones de caoutchouc "emprisonnées" entre les secteurs et le noyau constituent en sortie de moule, des défauts couramment appelés "bavures" qui nécessitent d'être ôtés manuellement et qui représentent une perte de matière non négligeable.
De plus, dans un moule totalement rigide, la dilatation volumique de la bande de roulement au moment de la vulcanisation peut provoquer une augmentation considérable de pression et des détériorations importantes sur certaines parties du moule.

Une solution consiste à réaliser un contrôle de pression permettant, lorsqu'un seuil prédéterminé a été atteint, de laisser s'écarter légèrement les secteurs de la couronne, par exemple par une diminution de la pression extérieure exercée sur ces derniers, et ainsi de réaliser une extension radiale de l'espace de moulage. Cependant lors d'une telle extension, du caoutchouc issu de la bande de roulement peut fluer à l'interface du noyau rigide et des secteurs d'où l'apparition de bavures.

Par ailleurs, cette solution ne résout pas les problèmes de bavures crées lors de la fermeture du moule.

L'invention vise à pallier les difficultés précédentes et notamment à permettre d'obtenir des bandes de roulement sans bavures entre le noyau et les secteurs, quelle que soit l'origine de ces dernières : issues du moulage à la fermeture du moule ou de la vulcanisation.

Dans la suite, par analogie avec le pneumatique, on désignera par "épaule" du noyau, la zone du noyau située entre son sommet et un de ses flancs.

Selon l'invention, le noyau porte des moyens mobiles de liaison étanche dudit noyau avec les secteurs quelle que soit la position de ces derniers comprise entre la position de fermeture de la couronne et une position faiblement écartée des secteurs, et lesdits secteurs, le noyau et les moyens de liaison délimitent l'espace de moulage de la bande de roulement.

Selon une caractéristique de l'invention, le noyau comportant de façon connue en soi un sommet, des flancs et des épaules, les moyens de liaison comprennent pour chaque épaule un élément annulaire définissant la surface extérieure de cette épaule et chaque élément annulaire comporte un premier bord périphérique monté au contact du sommet dudit noyau et un second bord périphérique mobile entre deux positions déterminées, et qui assure la liaison entre le noyau et les secteurs. Cette liaison est avantageusement réalisée par contact glissant étanche.

Préférentiellement, le second bord périphérique de chaque élément annulaire est mobile, par déformation élastique dudit élément annulaire, entre une position initiale et une position comprimée.

L'invention a donc pour objet un moule perfectionné réalisant une liaison étanche des secteurs de la couronne et du noyau, par contact glissant et grâce à la déformation élastique de moyens mobiles portés par le noyau, dès le début du moulage c'est-à-dire avant la fermeture complète du moule et lorsque l'on procède à un léger écartement des secteurs au moment de la vulcanisation.

D'autres caractéristiques et avantages de l'invention apparaîtront à la lecture de la description d'un exemple de réalisation d'un moule perfectionné conforme à l'invention en référence aux dessins dans lesquels :
- la figure 1 est une coupe méridienne partielle du moule en position fermée initiale,
- la figure 2 est une représentation perspective du noyau du moule représenté à la figure 1,
- la figure 3 est une coupe partielle du moule lors de la vulcanisation.

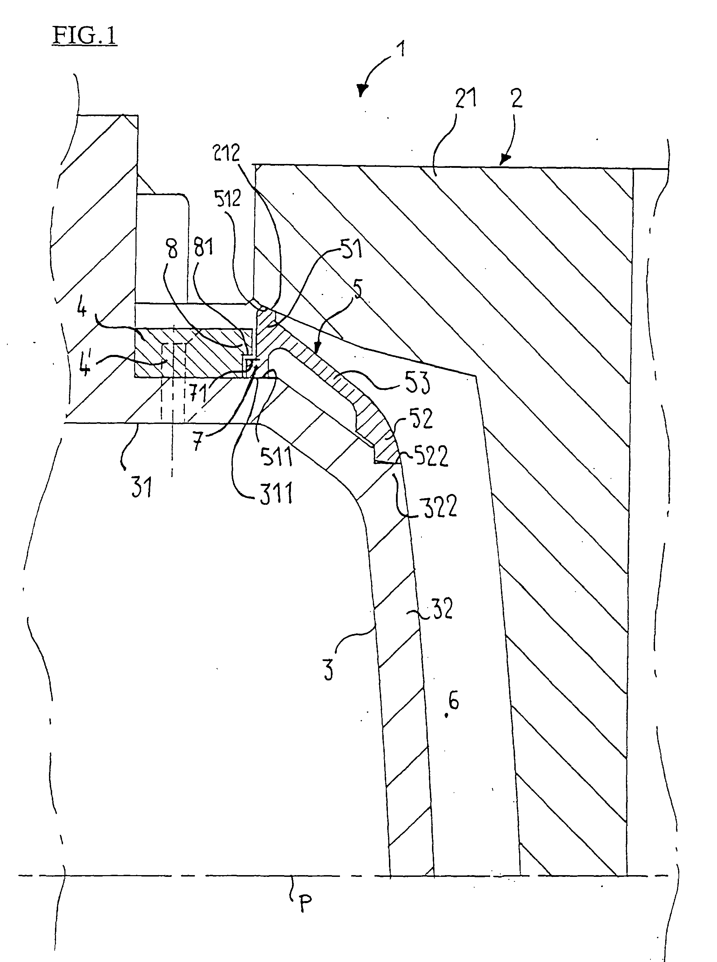

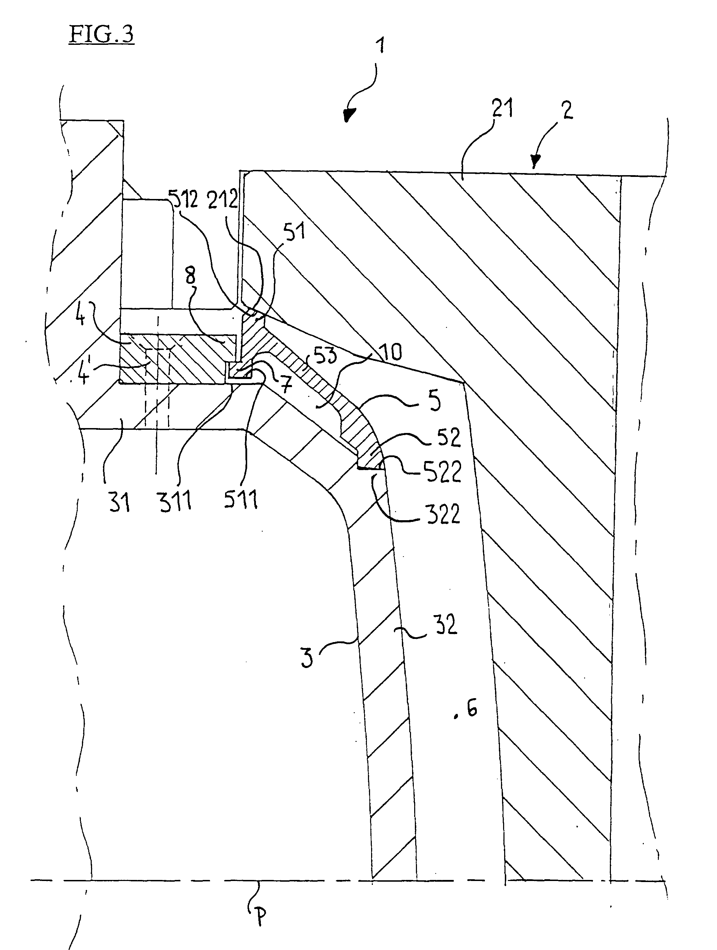

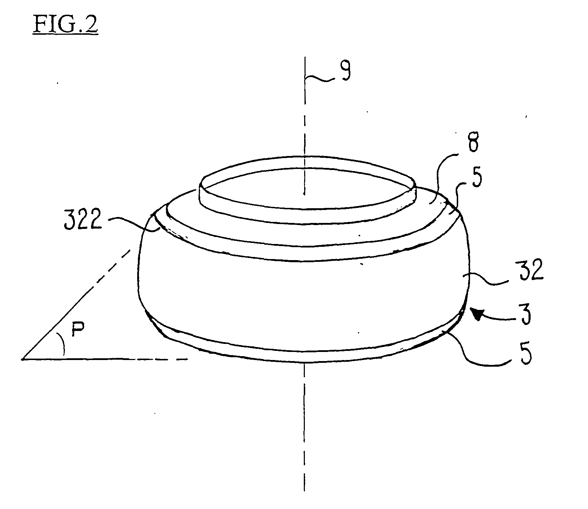

Selon les figures 1 et 2, le moule 1 comprend, au moins :
- une couronne 2 divisée en secteurs 21 mobiles radialement entre une position de fermeture et une position d'ouverture de la couronne 2, assurant le moulage extérieur de la bande de roulement,
- un noyau métallique rigide 3 de forme quasi-torique définissant la surface intérieure de ladite bande de roulement. Ce noyau 3 qui comprend des flancs 31, un sommet 32 et des épaules, porte des moyens de liaison dudit noyau 3 avec les secteurs 21 de la couronne 2, constitués pour chaque épaule par un élément annulaire 5 rapporté susceptible de subir une déformation élastique et délimitant la face extérieure de ladite épaule,
- des bagues de fixation 4 chacune d'un élément 5 sur le noyau 3, coaxiales auxdits éléments 5 et fixées rigidement sur chaque flanc 31 par un dispositif de fixation classique tel que des vis 4'.

La cavité 6 délimitée par le sommet 32 du noyau 3, les éléments 5 et la couronne 2, définit l'espace de moulage de la bande de roulement.
Le moule 1 étant symétrique par rapport à son plan médian horizontal P représenté à la figure 2, on ne décrira dans la suite de la description que la partie du moule 1 supérieure à ce plan.

L'élément 5, qui peut être réalisé sous forme d'une virole, comprend un premier bord périphérique 51, au niveau du flanc 31 du noyau 3, et un deuxième bord périphérique 52, au contact du sommet 32, limité par une face plane 522 parallèle au plan P du moule 1. Les deux bords 51 et 52 sont reliés par une paroi relativement mince 53 de forme extérieure bombée ou convexe selon un profil définissant la surface extérieure du noyau 3, et sont montés sur ledit noyau 3 comme suit :
- le bord 52 est monté radialement sur un épaulement 322 du sommet 32 de sorte qu'il y ait une continuité des surfaces extérieures de l'épaulement 322 et du bord 52,
- le bord 51 porte un premier épaulement 7 cylindrique qui coopère par sa surface d'appui 71 parallèle au plan P, avec la surface 81 d'un second épaulement cylindrique 8 porté par la surface de révolution extérieure 41 de la bague 4 et qui s'étend sur toute sa circonférence.
L'élément 5 est monté précontraint sur le noyau 3 grâce à la bague 4. En effet, le bord 52 étant positionné contre l'épaulement 322 porté par le sommet 32, l'élément 5 est comprimé par l'intermédiaire de son bord 51 vers le flanc 31 du noyau 3 et maintenu dans cette position par le montage de la bague 4 dont l'épaulement 8 limite le déplacement axial de l'épaulement 7 dudit bord 51. La précontrainte permet, de plus, d'immobiliser le bord 52 contre l'épaulement 322 du noyau 3. La bague 4 maintient ainsi l'élément 5 dans une position initiale de précontrainte sur le noyau 3.

Le bord 51 porte également deux surfaces intérieure 511 et extérieure 512 de contact respectivement avec une surface 311 portée extérieurement par le flanc 31 et une surface 212 portée intérieurement par les secteurs 21.
Les surfaces 512 et 212 sont tronconiques au contraire des surfaces 511 et 311 qui sont sensiblement perpendiculaires à l'axe vertical 9 du moule 1. De plus, les surfaces 512 et 212 réalisent un contact glissant étanche de sorte qu'elles assurent une liaison étanche de façon continue lors du passage de la position de fermeture de la couronne 2 à une position faiblement écartée des secteurs 21, et inversement.

Le bord 52 reste fixe par rapport à l'épaulement 322, alors que le bord 51 par la déformation élastique de l'élément 5 est mobile entre une position initiale de précontrainte définie précédemment et une position dite "comprimée" dans laquelle l'élément 5 subissant une compression supplémentaire, les surfaces 511 et 311 sont mises en contact contrairement aux épaulements 7 et 8. Cette compression supplémentaire est réalisée par la pression des secteurs 21 sur l'élément 5 par l'intermédiaire de leurs surfaces respectivement 212 et 512.

Le réglage du moule 1 est réalisé de sorte que la position initiale du bord 51 corresponde à une position des secteurs 21 non jointifs mais proches de la jonction, et que la position de fermeture complète de la couronne 2 impose à l'élément 5 une compression amenant son bord 51 en contact avec le noyau 3.

Il est nécessaire de préciser que le déplacement possible du bord 51 est de très faible amplitude, tel que son déplacement axial soit de l'ordre du millimètre.

Afin d'obtenir une telle déformation élastique, on peut choisir comme matériau constitutif de l'élément 5 un alliage métallique, tel qu'un alliage à base de chrome et de molybdène à titre d'exemple, susceptible de réaliser un bon compromis entre l'élasticité nécessaire au déplacement du bord 51 et une rigidité suffisante au maintien en position du bord 52. Un tel alliage permet, de plus, d'assurer une bonne conduction thermique et de résister à l'usure due aux frottements des surfaces 512 et 212. A cette fin, il peut être utile de faire subir à la surface 212 généralement métallique, un traitement de surface.

Dans le but d'améliorer l'élasticité de l'élément 5 due au choix de matériau, la paroi 53 dudit élément délimite avec le noyau 3 une cavité vide 10. L'épaisseur de la paroi 53 est, de plus, déterminée pour permettre par flexion un certain débattement radial du bord 51 par rapport au bord 52.

Dans ce qui suit on décrira le fonctionnement du moule 1 à travers celui de la partie supérieure dudit moule par rapport au plan P.

Avant le moulage de la bande de roulement, l'élément 5 étant précontraint sur le noyau 3, l'épaulement 7 du bord 51 est en appui sur l'épaulement 8 de la bague 4 alors que la surface 511 n'est pas en contact avec la surface 311 du flanc 31.

On procède à la fermeture du moule 1 par le rapprochement des secteurs 21. Pour obtenir les mouvements des secteurs 21 de la couronne 2, on utilise de façon classique tout moyen approprié tel que des vérins mécaniques, hydrauliques ou pneumatiques.

Le contact de la surface 512 du bord 51 avec la surface 212 des secteurs 21 se produit avant que ces derniers ne soient jointifs. Ainsi la liaison étanche entre les secteurs 21 et le noyau 3 est réalisée avant que la phase de moulage n'ait commencé et empêche donc dès le commencement de cette dernière un fluage éventuel de caoutchouc entre ces surfaces.

Les secteurs 21 soumettent alors l'élément 5 à une compression supplémentaire pour atteindre leur position de fermeture, représentée à la figure 1. Le bord 51 passe alors en position comprimée : les épaulements 7 et 8 ne sont plus en contact contrairement aux surfaces 511 et 311.

On procède ensuite à une montée en température jusqu'à la température de vulcanisation qui peut être de l'ordre de 160°C. Le volume de caoutchouc dans la cavité 6 correspondant sensiblement au volume de ladite cavité, la dilatation du caoutchouc entraîne une augmentation progressive de la pression interne dans la cavité 6.

Au delà d'un seuil de pression donné, on autorise, par tout dispositif approprié, un léger recul des secteurs 21 correspondant au plus à la position initiale du bord 51 pour continuer à assurer la liaison noyau-secteurs, et réalisant une extension radiale du volume de la cavité 6.
Cet écartement supprime, tout ou en partie, la compression supplémentaire subie par l'élément 5. Ce dernier, du fait de son élasticité, revient alors vers sa position initiale et continue donc à être en contact avec les secteurs 21, les surfaces 212 des secteurs et 512 du bord 51 formant toujours une liaison étanche par contact glissant comme le montre la figure 3. Tout se passe comme si l'élément 5 suivait le mouvement de recul des secteurs 21.

Ainsi l'extension radiale réalisée pour augmenter le volume de la cavité 6, ne provoque pas d'écartement au niveau de l'interface noyau-secteurs. Il n'y a donc pas de flux possible de caoutchouc au niveau de cet interface.

Ainsi la bande de roulement obtenue ne présente aucune bavure dans la zone correspondant à la jonction du noyau 3 et des secteurs 21.

## Revendications

1. Moule perfectionné (1) pour le moulage et la vulcanisation de bandes de roulement annulaires notamment destinées au rechapage de pneumatiques, comprenant au moins un noyau rigide (3) définissant la surface intérieure de la bande de roulement, et une couronne (2) divisée en secteurs (21) mobiles radialement entre une position d'ouverture et une position de fermeture de ladite couronne (2), assurant le moulage extérieur de la bande de roulement, **caractérisé par le fait que** le noyau (3) porte des moyens mobiles (5) de liaison étanche dudit noyau (3) avec les secteurs (21) quelle que soit la position de ces derniers comprise entre la position de fermeture de la couronne (2) et une position faiblement écartée des secteurs (21), et que lesdits secteurs (21), le noyau (3) et les moyens de liaison (5) délimitent l'espace de moulage de la bande de roulement.

2. Moule selon la revendication 1, **caractérisé par le fait que** le noyau (3) comportant de façon connue en soi un sommet (32), des flancs (31) et des épaules, les moyens de liaison comprennent pour chaque épaule un élément annulaire (5) définissant la surface extérieure de cette épaule et que chaque élément annulaire (5) comporte un premier bord périphérique (52) monté au contact du sommet (32) dudit noyau (3) et un second bord périphérique (51) mobile entre deux positions déterminées, et qui assure la liaison entre le noyau (3) et les secteurs (21).

3. Moule selon la revendication 2, **caractérisé par le fait que** le second bord périphérique (51) de chaque élément annulaire (5) est mobile par déformation élastique dudit élément annulaire (5), entre une position initiale et une position comprimée.

4. Moule selon l'une quelconque des revendications 2 ou 3, **caractérisé par le fait que** la liaison entre le noyau (3) et les secteurs (21) est réalisée par contact glissant étanche.

5. Moule selon l'une quelconque des revendications 2 à 4, **caractérisé par le fait que** chaque élément annulaire (5) est maintenu axialement sur le noyau (3) par l'intermédiaire d'une bague de fixation (4) coaxiale et montée sur le flanc (31) correspondant du noyau (3).

6. Moule selon la revendication 5, **caractérisé par le fait que** chaque élément annulaire (5) porte un premier épaulement (7) cylindrique qui coopère avec un deuxième épaulement cylindrique (8) porté par la bague de fixation (4) et qui s'étend sur toute sa circonférence.

7. Moule selon l'une quelconque des revendications 5 ou 6, **caractérisé par le fait que** chaque élément annulaire (5) est monté précontraint sur le noyau (3) par l'intermédiaire de la bague de fixation (4) correspondante.

8. Moule selon l'une quelconque des revendications 2 à 7, **caractérisé par le fait que** le premier bord périphérique (52) de chaque élément annulaire (5) est monté fixe sur un épaulement (322) porté par le sommet (32) du noyau (3), et forme avec ledit épaulement (322) une surface extérieure continue.

9. Moule selon l'une quelconque des revendications 2 à 8, **caractérisé par le fait que** le bord périphérique (51) mobile de chaque élément annulaire (5) possède deux surfaces extérieure (512) et intérieure (511) opposées de contact respectivement avec une surface (212) portée intérieurement par la couronne (2) et une surface (311) portée extérieurement par le flanc (31) concerné du noyau (3).

10. Moule selon la revendication 9, **caractérisée par le fait que** les surfaces de contact respectivement extérieure (512) de l'élément annulaire (5) et portée intérieurement (212) par la couronne (2) sont tronconiques et réalisent un contact glissant étanche.

11. Moule selon l'une quelconque des revendications 2 à 10, **caractérisé par le fait que** le déplacement axial du bord périphérique mobile (51) de l'élément annulaire (5) est de l'ordre du millimètre.

12. Moule selon l'une quelconque des revendications 2 à 11, **caractérisé par le fait que** la surface intérieure (53) de chaque élément annulaire (5), comprise entre ses bords périphériques (51, 52), délimite avec le noyau (3) une cavité (10).

13. Moule selon l'une quelconque des revendications 1 à 12, **caractérisé par le fait que** les moyens de liaison (5) sont constitués par un matériau métallique.

## Patentansprüche

1. Weiterentwickelte Form (1) für das Abformen und die Vulkanisation ringförmiger Laufflächen, die besonders zur Runderneuerung von Reifen bestimmt sind, mit mindestens einem starren Kern (3), der die Innenfläche der Lauffläche festlegt, und einem Kranz (2), der in Sektoren (21) unterteilt ist, die radial zwischen einer Öffnungslage und einer Schließlage des genannten Kranzes (2) beweglich sind und die äußere Abformung der Lauffläche sicherstellen, **dadurch gekennzeichnet, daß** der Kem (3) bewegliche Mittel (5) zur dichten Verbindung des genannten Kernes (3) mit den Sektoren (21) trägt, wie auch die Lage dieser sein mag, die zwischen der Schließlage des Kranzes (2) und einer leicht entfernten Lage der Sektoren (21) liegt, und daß die genannten Sektoren (21), der Kern (3) und die Verbindungsmittel (5) den Formhohlraum der Lauffläche begrenzen.

2. Form nach Anspruch 1, **dadurch gekennzeichnet, daß**, wenn der Kern (3) in an sich bekannter Weise einen Scheitel (32), Flanken (31) und Schultern aufweist, die Verbindungsmittel für jede Schulter ein ringförmiges Element (5) aufweisen, das die Außenfläche dieser Schulter bildet, und daß jedes ringförmige Element (5) einen ersten Umfangsrand (52) aufweist, der in Berührung mit dem Scheitel (32) des genannten Kernes (3) angebracht ist, sowie einen zweiten Umfangsrand (51), der zwischen zwei bestimmten Lagen beweglich ist und die Verbindung zwischen dem Kern (3) und den Sektoren (21) sicherstellt.

3. Form nach Anspruch 2, **dadurch gekennzeichnet, daß** der zweite Umfangsrand (51) eines jeden, ringförmigen Elements (5) durch elastische Verformung des genannten, ringförmigen Elements (5) zwischen einer Ausgangslage und einer zusammengedrückten Lage beweglich ist.

4. Form nach irgendeinem der Ansprüche 2 oder 3, **dadurch gekennzeichnet, daß** die Verbindung zwischen dem Kern (3) und den Sektoren (21) durch dichte Gleitberührung hergestellt ist.

5. Form nach irgendeinem der Ansprüche 2 bis 4, **dadurch gekennzeichnet, daß** jedes ringförmige Element (5) axial auf dem Kern (3) mittels eines Befestigungsringes (4) gehalten ist, der koaxial ist und auf der entsprechenden Flanke (31) entsprechend dem Kerm (3) angebracht ist.

6. Form nach Anspruch 5, **dadurch gekennzeichnet, daß** jedes ringförmige Element (5) eine erste, zylindrische Schulter (7) trägt, die mit einer zweiten, zylindrischen Schulter (8) zusammenwirkt, die vom Befestigungsring (4) getragen ist und sich über dessen gesamten Umfang erstreckt.

7. Form nach irgendeinem der Ansprüche 5 oder 6, **dadurch gekennzeichnet, daß** jedes ringförmige Element (5) unter Vorspannung auf dem Kern (3) mittels des entsprechenden Befestigungsringes (4) angebracht ist.

8. Form nach irgendeinem der Ansprüche 2 bis 7, **dadurch gekennzeichnet, daß** der erste Umfangsrand (52) eines jeden, ringförmigen Elements (5) fest auf einer Schulter (322) angebracht ist, die vom Scheitel (32) des Kerns (3) getragen ist, und zusammen mit der genannten Schulter (322) eine durchgehende, äußere Fläche bildet.

9. Form nach irgendeinem der Ansprüche 2 bis 8, **dadurch gekennzeichnet, daß** der bewegliche Umfangsrand (51) eines jeden ringförmigen Elements (5) zwei gegenüberliegende Flächen besitzt, und zwar eine Außenfläche (512) und eine Innenfläche (511). zur Berührung mit einer Fläche (212), die innen durch den Kranz (2) getragen ist, bzw. einer Fläche (311), die außen durch die entsprechende Flanke (31) des Kerns (3) getragen ist.

10. Form nach Anspruch 9, **dadurch gekennzeichnet, daß** die äußere Berührungsfläche (512) des ringförmigen Elements (5) bzw. die innen durch den Kranz (2) getragene Berührungsfläche (212) kegelstumpfförmig sind und eine dichte Gleitberührung herstellen.

11. Form nach irgendeinem der Ansprüche 2 bis 10, **dadurch gekennzeichnet, daß** die axiale Verlagerung des beweglichen Umfangsrandes (51) des ringförmigen Elements (5) in der Millimeter-Größenordnung liegt.

12. Form nach irgendeinem der Ansprüche 2 bis 11, **dadurch gekennzeichnet, daß** die Innenfläche (53) eines jeden ringförmigen Elements (5), die zwischen seinen Umfangsrändern (51, 52) liegt, zusammen mit dem Kern (3) einen Hohlraum (10) festlegt.

13. Form nach irgendeinem der Ansprüche 1 bis 12, **dadurch gekennzeichnet, daß** die Verbindungsmittel (5) aus einem metallischen Material gebildet sind.

## Claims

1. An improved mould (1) for moulding and vulcanising annular treads intended, in particular, for recapping tyres, comprising at least a rigid core (3) defining the inner surface of the tread and a crown (2) divided into sectors (21) which are movable radially between an open position and a closed position of said crown (2), ensuring the outer moulding of the tread, **characterised by** the fact that the core (3) bears movable means (5) for hermetic connection of said core (3) to the sectors (21), whatever the position of the latter between the closed position of the crown (2) and a slightly moved-apart position of the sectors (21), and that said sectors (21), the core (3) and the connection means (5) define the moulding space for the tread.

2. A mould according to Claim 1, **characterised by** the fact that the core (3) comprising, in known manner, a crown section (32), sidewalls (31) and shoulders, the connecting means comprise for each shoulder an annular element (5) defining the outer surface of this shoulder and that each annular element (5) comprises a first peripheral edge (52) mounted in contact with the crown section (32) of said core (3) and a second peripheral edge (51) which is movable between two given positions, and which ensures the connection between the core (3) and the sectors (21).

3. A mould according to Claim 2, **characterised by** the fact that the second peripheral edge (51) of each annular element (5) is movable, by elastic deformation of said annular element (5), between an initial position and a compressed position.

4. A mould according to any one of Claims 2 or 3, **characterised by** the fact that the connection between the core (3) and the sectors (21) is effected by hermetic sliding contact.

5. A mould according to any one of Claims 2 to 4, **characterised by** the fact that each annular element (5) is held axially on the core (3) by means of a coaxial fastening ring (4) mounted on the corresponding sidewall (31) of the core (3).

6. A mould according to Claim 5, **characterised by** the fact that each annular element (5) has a first cylindrical shoulder (7) which co-operates with a second cylindrical shoulder (8) borne by the fastening ring (4) and which extends over the entire circumference thereof.

7. A mould according to any one of Claims 5 or 6, **characterised by** the fact that each annular element (5) is mounted, prestressed, on the core (3) by means of the corresponding fastening ring (4).

8. A mould according to any one of Claims 2 to 7, **characterised by** the fact that the first peripheral edge (52) of each annular element (5) is mounted fixed on a shoulder (322) borne by the crown section (32) of the core, and forms a continuous outer surface with said shoulder (322).

9. A mould according to any one of Claims 2 to 8, **characterised by** the fact that the movable peripheral edge (51) of each annular element (5) has two opposed surfaces, an outer surface (512) and an inner surface (511), for contact respectively with a surface (212) borne internally by the crown (2) and a surface (311) borne externally by the sidewall (31) in question of the core (3).

10. A mould according to Claim 9, **characterised by** the fact that the contact surfaces, respectively the outer one (512) of the annular element (5) and the one borne internally (212) by the crown (2) are frustoconical and effect hermetic sliding contact.

11. A mould according to any one of Claims 2 to 10, **characterised by** the fact thàt the axial displacement of the movable peripheral edge (51) of the annular element (5) is of the order of a millimetre.

12. A mould according to any one of Claims 2 to 11, **characterised by** the fact that the inner surface (53) of each annular element (5), between its peripheral edges (51, 52), defines with the core (3) a cavity (10).

13. A mould according to any one of Claims 1 to 12, **characterised by** the fact that the connection means (5) are formed of a metallic material.
